# EUROPEAN PATENT APPLICATION

(11) **EP 4 130 412 A1**
(43) Date of publication of application: **08.02.2023**
(21) Application number: 22189122.9
(22) Date of filing: 05.08.2022
(51) Int. Cl.: E04H 17/14, A01K 3/00, F16B 7/04

(54) **A BRACE MOUNT**

(30) Priority: 05.08.2021 GB 202111335
(71) Applicant: Protectapet Limited, Alsager Stoke-on-Trent Staffordshire ST7 2EW (GB)
(72) Inventor: DAVIES, Simon, Stoke-on-Trent, ST7 2EW (GB)
(74) Representative: Swindell & Pearson Limited

(57) **Abstract**

A brace mount la, lb, lc for attaching a brace 9 to a post 8. Each brace mount configuration la, lb, lc comprises a section comprising: a body 2, a first connection portion 5, a second connection portion 5, and a brace attachment means 4. The body 2 surrounds part of a post 8 when used. The first and second connection portions 5 of the section connect the body 2 to the rest of the brace mount la, lb, lc around the post 8. The first connection portion 5 is shaped, and positioned on the body 2, to have the shape of, and position on the body 2 of, the second connection portion 5 if it were rotated 180 degrees about an axis running through the centre of a plane extending from the first connection portion 5 to the second connection portion 5 and which, in use, Is perpendicular to a central axis of the post 8.

## Description

### Technical Field of the Invention

The present invention relates to brace mounts. In particular, but not exclusively, the invention concerns brace mounts for fitting around fencing posts.

### Background to the Invention

The construction of effective fences and enclosures requires structural posts to be installed which are secured in place. Methods for securing the position and alignment of posts may include the use of foundations in the ground such as concrete, and the attachment of structural braces to provide additional support against both sideways and axial movement of the post. Structural braces in particular help to reduce potential leverage against a post by moving the fulcrum of the post further from its base. Structural braces are also of particular use in instances where it is not practical to seta post within a foundation, such as for animal enclosures which may need to be reassembled, moved, ormodified.

Fences for enclosing animals or goods often comprise both posts and braces, which in turn support and strengthen the positioning of the posts.

Brace mounts can be used to attach braces to posts and are typically available for use in pre-set configurations. In cases where many brace-mounting configurations are required, it is necessary to use brace mounts which accommodate the intended configuration and layout of an enclosure. If a user wished to change the layout of a fencing enclosure, they would either need to recycle the pre-set brace mount configurations which they already own or acquire new brace mounts to meet their need. Re-used brace mounts may also be left with exposed brace attachment portions, providing a risk of catching on fur or skin if the fencing is used to contain animals. Embodiments of the present invention seek to overcome or ameliorate these or other disadvantages to provide an improved brace mount.

### Summary of the Invention

According to a first aspect of the present invention there is provided a brace mount for attaching a brace to a post, the brace mount comprising a section comprising:
a body, a first connection portion, a second connection portion, and a brace attachment means, wherein:
a) the body is operable to surround part of the post in use;
b) the first and second connection portions are operable to connect the body to the rest of the brace mount, around the post, the first and second connection portions shaped and positioned on the body that the first connection portion is operable to connect to a first part of the rest of the brace mount and the second connection portion operable to connect to a second part of the rest of the brace mount when the body is in a first orientation around the post and with respect to the rest of the brace mount, and the first connection portion is operable to connect to the second part of the rest of the brace mount and the second connection portion is operable to connect to the first part of the rest of the brace mount when the body is in a second orientation around the post and with respect to the rest of the brace mount, the first orientation being different from the second orientation; and
c) the brace attachment means is positioned on the body, and the brace attachment means is configured to receive the brace.

Providing a brace mount with a body with such connection portions means that the body can be connect around the post in one of two different orientations. This allows the brace to be attached in one of two different ways with respect to the post. A manufacturer therefore only has to manufacturer one type of brace mount while providing two different positions with respect to the post for the brace, saving on costs without a loss in flexibility in a how a fence involving one or more brace mounts might be built.

The first orientation may be a 180 degrees rotation of the second orientation about a line perpendicular to a central axis of the post. This means the body can connect in either of two positions which are 180 degrees rotation of each other.

The line may extend through a plane extending from the first connection portion to the second connection portion.

A centre of the brace attachment means may be off the line. This means the brace attachment means will have a different position around the post in each orientation.

The rest of the brace mount may comprise at least one further body operable to surround a further part of the post in use. The further body may comprise an inner surface which in use, faces the post. The rest of the brace mount may comprise a further brace attachment means, configured to receive a brace. The further brace attachment means may be positioned on the body.

One or more of the bodies may be a plate. The connection portions may be positioned on edges of the plate. Each connection portion may be positioned on opposite edges of the plate.

The or each inner surface may be shaped to, in use, fit to an opposing surface of the post. A profile of the inner surface may match a profile of the opposing surface of the post. This increases the ease with which a user aligns the body against the post during fitting.

The or each body may comprise an inner surface which, in use, faces the post. The or each body may comprise an outer surface which, in use, faces away from the post. The or each respective brace attachment means may be positioned on the outer surface. The or each respective brace attachment means may protrude from the outer surface. The or each respective brace attachment means may protrude radially from the outer surface.

Providing the brace attachment means such that it is positioned on the outer surface enables a strong supporting point for a brace which is attached to the brace mount. The radial nature would help to prevent rotational forces being applied to the brace mount by any braces which are attached via the brace attachment means.

The or each body may have the shape of part of a tube. The or each body may have the shape of part of a polygonal tube. The or each body may have the shape of part of a rectangular tube. The or each body may have the shape of a corner of a polygonal tube. Alternatively, the or each body may have the shape of part of a cylindrical tube.

The or each body may comprise a first sheet and a second sheet, the first and second sheet joined together at an angle to each other. The first and second sheet may each be rectangular. The first and second sheet may each be joined together at a respective edge. The or each body may be a bracket.

The or each body may be shaped with the centre of the inner surface aligned with the centre of the corner. The or each body may be shaped with the centre of the inner surface at the join between the first and second sheet.

One or more of the brace attachment means may be positioned on the respective first sheet. One or more of the brace attachment means may be positioned solely on the respective first sheet. One or more of the brace attachment means may be positioned on the centre of the respective first sheet. One or more of the brace attachment means may be positioned with the centre of the brace attachment means aligned with the centre of the respective first sheet.

The or each body being the shape of a corner of a polygonal tube further enables guided fitting of the body around a corresponding post, improving the ease by which a user may fit the brace mount to a post. Furthermore, when the body of the section of the brace mount is connected to the rest of the brace mount via the connection portions, rotation of the body around the post will be prevented. These features provide structural strength to the brace mount when fitted.

One or more of the brace attachment means may be a loop. One or more of the brace attachment means may be a pair of loops. One or more of the brace attachment means may be configured to receive an eye bolt of a brace.

The or each body may have a rigid core. The or each body may have an outer cladding. The rigid core may be formed of metal. The outer cladding may be formed of plastic. The connection portions of the brace mount may be formed as part of the rigid core of the or each body. The or each brace attachment means may be formed as part of the rigid core.

Providing an outer cladding may improve the user experience when fitting, as rigid materials such as metal may be uncomfortable to touch in colder or hotter conditions.

Each connection portion may comprise a magnet. The magnets of the connection portions may be positioned with magnetic fields in the same direction. Each cooperating connection portion may comprise a magnet. The magnets of the cooperating connection points may be positioned with the magnetic fields in the opposite direction to the magnet of the respective connection portion.

The use of magnets in the connection portions may help a user when aligning ends of the connection portions to form the brace mount.

The first part may be a first cooperating connection portion. The second part may be a second cooperating connection portion.

Each connection portion is preferably configured to interact with a respective locking pin. Each respective locking pin may be a sliding pin. Each locking pin may comprise a cavity which is configured to envelop one of the connection portions and the respective cooperating connection portion in use. The cavity of each locking pin may comprise a pin taper.

The use of a pin taper enables improved user experience when sliding the locking pin over the connection portion and the respective cooperating connection portion.

The locking pin may comprise an open end. The locking pin may comprise a side slot. The locking pin may comprise a cap. The side slot may lead into the cavity of the locking pin. The cap may be positioned at the opposite end of the locking pin to the open end.

Provision of an end cap may help to ensure that the pin doesn't slide off the connection portions as it may be held in place by gravity when positioned such that the cap is located at the top of the locking pin.

Each connection portion may comprise a shaped cross-sectional profile in the plane which runs perpendicular to the axis of the post. The shaped profile may be such that each connection portion, when placed next to the respective cooperating connection portion forms part of a whole shape. The whole shape may have a substantially circular form. The locking pin may be configured to envelop the whole shape of connection portion and respective cooperating connection portion when they are placed next to each other.

This enables a tidier brace mount interface when a limited number of braces are required for attaching to the brace mount when fitted to the post.

The rest of the brace mount may comprise a section identical to the section of the brace mount.

The brace mount may be configured such that it forms an interference fit when attached to the post. The inner surface may comprise a high friction material. The high friction material may be rubber.

Provision of a brace mount which forms an interference fit when attached to the post means that the brace mount may be securely held in place prior to and post attachment of braces to the brace mount and post.

The brace mount may be configured for use as component of a pet or livestock enclosing fence.

According to a second aspect of the present invention, there is provided a fence comprising one or more brace mounts of the first aspect.

### Detailed Description of the Invention

In order that the invention may be more clearly understood embodiments thereof will now be described, by way of example only, with reference to the accompanying drawings, of which:

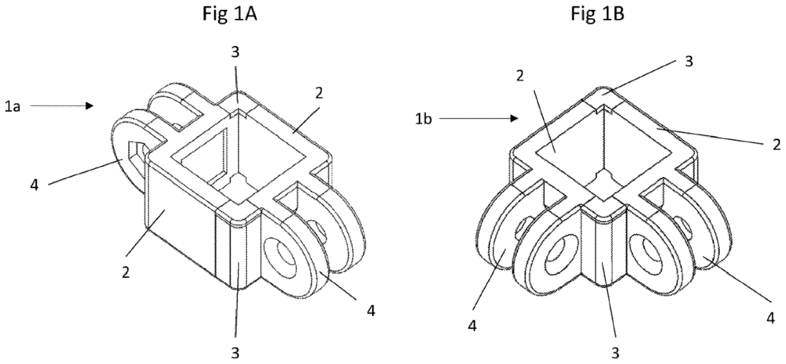

- Figures 1A-B: show two three-dimensional representations of potential configurations of the brace mount when assembled, with figure 1A showing a brace mount with brace attachment means assembled to have an angle of 180 degrees between then, and with figure 1B showing a brace mount with brace attachment means assembled to have an angle of 90 degrees between them;

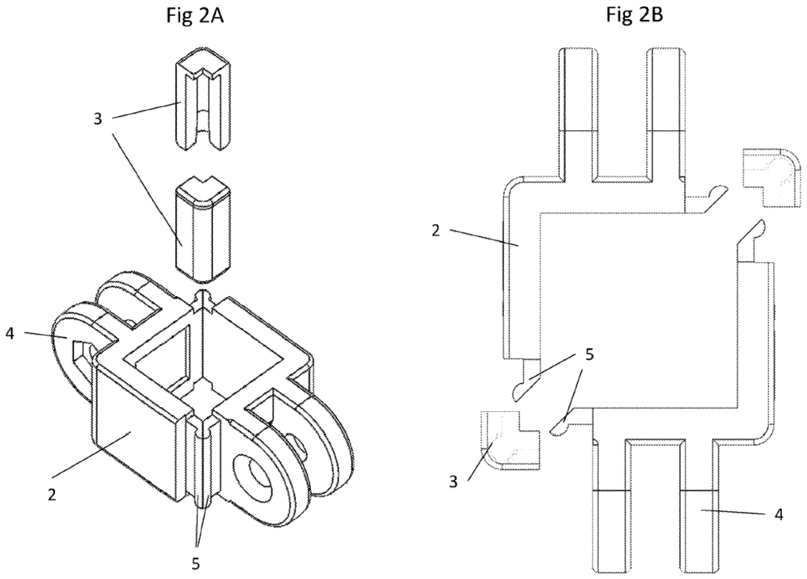

- Figures 2A-B: respectively show a three-dimensional and a top-down representation of the disassembled components of the configuration of figure 1A;

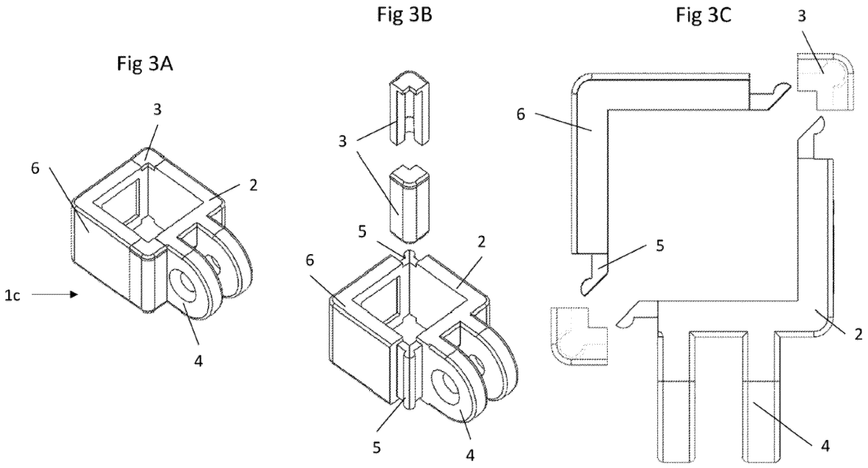

- Figures 3A-C: show a further brace mount configuration comprising a single brace attachment means, with figure 3A showing a three-dimensional representation of an assembled brace mount with only a single brace attachment means, with figure 3B showing a three-dimensional disassembled representation of the brace mount of figure 3A, and with figure 3C showing a top-down disassembled representation of the brace mount of figure 3A;
- Figures 4A-B: respectively show a section of the brace mount system comprising a brace attachment means, and a section of the brace mount system not comprising a brace attachment means;
- Figures 5A-C: respectively show a three-dimensional view of a locking pin, a bottom-up view of the locking pin, a top-down view of the locking pin, and an eye bolt of a brace; and
- Figures 6A-D: respectively show two examples of the brace attachment configuration of figure 1A in use around a post, an example of the brace attachment configuration of figure 1B in use around a post, and an example of the brace attachment configuration of figure 3A in use around a post.

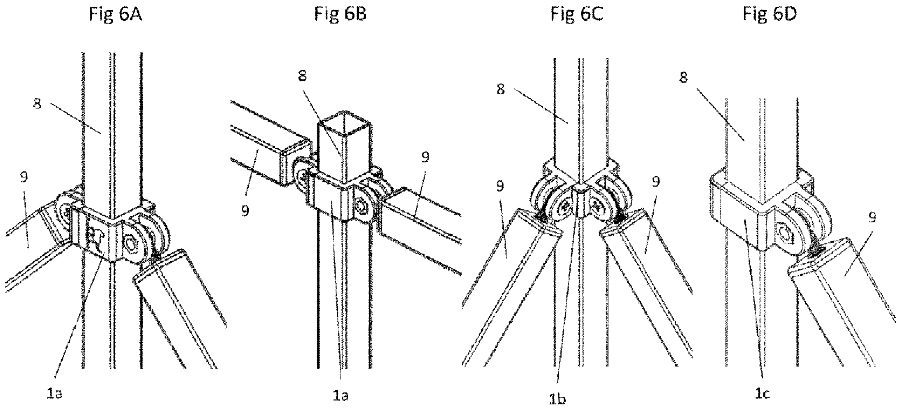

The present disclosure concerns a brace mount 1a, 1b, 1c for attaching a brace 9 to a post 8. Some examples of potential configurations of the brace mount la, 1b, 1c in use are depicted in figures 6A-D. Each brace mount configuration la, 1b, 1c comprises a section comprising: a body 2, a first connection portion 5, a second connection portion 5, and a brace attachment means 4.

The body 2 surrounds part of a post 8 when used. The first and second connection portions 5 of the section connect the body 2 to the rest of the brace mount la, 1b, 1c around the post 8. The first connection portion 5 is shaped, and positioned on the body 2, to have the shape of, and position on the body 2 of, the second connection portion 5 if it were rotated 180 degrees about an axis running through the centre of a plane extending from the first connection portion 5 to the second connection portion 5 and which, in use, is perpendicular to a central axis of the post 8.

The brace attachment means 4 is positioned on the body 2. The centre of the brace attachment means 4 is off the abovementioned of rotation axis, and the brace attachment means 4 are configured to receive the brace 9.

The non-limiting examples of the figures depict brace mount configurations for fitting a two-sectioned brace mount la, 1b, 1c to a post 8 with a substantially square cross-sectional area. It will be appreciated that in examples which are not depicted in the figures, two or more sections may be used to form brace mounts for attaching to a variety of different shaped posts. The posts may be circular or polygonal cross-sectioned in nature and the bodies of the sections of the brace mounts may be correspondingly shaped to fit against the post.

In the figures, three different configurations of brace mount la, 1b, 1c are depicted. These include a first configuration of brace mount la wherein the brace mount comprises two brace attachment means 4 which face in opposite directions. A second configuration of brace mount 1b comprises two brace attachment means 4 which are positioned to be at a right angle to each other. A third configuration of brace mount 1c comprises a single brace attachment means 4 facing in a single direction.

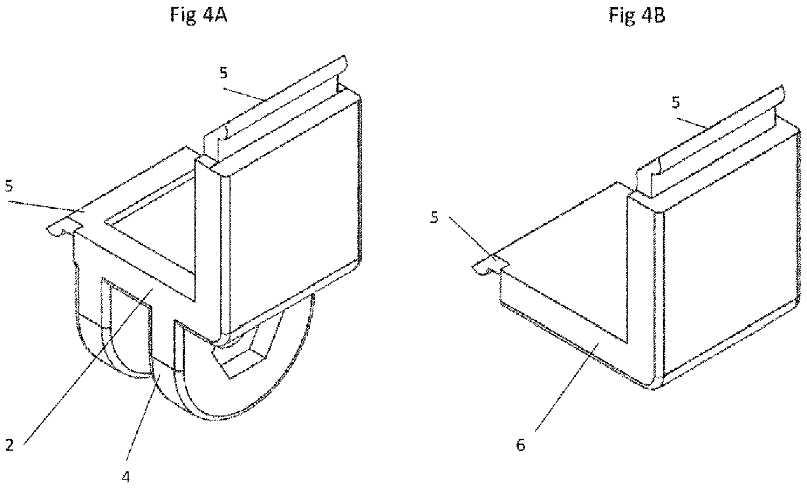

The first two configurations la, 1b utilise two sections comprising the same first type of body 2 as shown in Figure 4A. The third configuration 1c utilises two different sections, with one section comprising the first type of body 2 as shown in figure 4A and with a second section comprising a second type of body 6 as shown in figure 4B. The first type of body 2 comprises brace attachment means 4, while the second type of body 6 does not (as shown in figure 4B).

In all three configurations, the two sections are held together (in use) by a pair of locking pins 3 which are located at opposite sides of the post 8. The locking pins 3 hold the connection portion 5 of one section against a corresponding connection portion 5 of the second section when both sections are placed around a post 8, such that the connection portions 5 align. When the locking pins 3 have been slid over the adjacent connection portions 5, they secure the connection portions 5 and thus the two sections into a fixed position about the post 8.

The connection portions 5 of each type of section as depicted in the figures (comprising brace attachment means 4 or not) have an order of rotational symmetry of two when rotated about an axis running through the centre of a plane extending from the first connection portion 5 to the second connection portion 5 of the section and which, in use, is perpendicular to a central axis of the post 8 when in use (i.e when the brace mount la, 1b, 1c is fitted to the post 8). It should be noted that rotational symmetry is not necessarily required, so long as the connection portions 5 have a functionally equivalent shape when each respective type of section is rotated by 180 degrees about the axis described above.

This functionally equivalent rotational symmetry means that any combination of opposing connection portions from different sections may be fitted together regardless of which of the two 180-degree rotational positions are used for each section. This further enables the brace attachment means 4 of sections of the first type to be easily switched (from the perspective of a stationary viewer) from one side of the section to the other, based on which rotational position of the section is used.

The first type of section, as shown in figure 4A comprises a body 2, a first connection portion 5, a second connection portion 5 and a brace attachment means 4.

The body 2 is two substantially square sheets which are connected along an edge at a right angle to each other respectively. The connected sheets have a continual outer thickness, with the outside corner surfaces (i.e. the corner surfaces which are exposed when the brace mount la, 1b, 1c is fitted to a post 8) having a curved or rounded profile and the inside corners having a square profile with no curving or rounding. Rounding of the outside corner surfaces will help prevent accidental injury or snagging of skin or fur against the brace mount when in use as part of an enclosure.

The inner surfaces of the body 2 are flat and are shaped such that they would match the profile of two surfaces of a square cross-sectioned post 8. The flat inner surfaces extend into a portion of the connection portions 5 of the section. The connection portions 5 extend in the plane of each respective sheet of the body 2.

The body 2 is as an L-shaped bracket when viewed from the top down, which is sized to fit around a corresponding portion of the square cross-sectioned post 8.

In the first type of section as shown in figure 4A, a brace attachment means 4 extends perpendicularly from the outer surface of one of the sheets which form the body 2. The angle with which the brace extraction means protrudes is at 90 degrees from the plane of the sheet. As seen in Figure 4A, the brace extraction means comprises two rounded tabs which have a gap in between them. The gap is configured to accommodate insertion of a loop 13 of an eye bolt 7. The brace bolt is threaded such that it may be attached to a brace by a rotational screwing motion. The two rounded tabs of the attachment means 4 have a capital D-shaped profile with a circular hole through the middle of the D-shaped profile. The circular hole is in each tab is configured to accommodate insertion of a nut and bolt to assist with attaching and securing the loop 13 of the eye bolt 7 of the brace 9 to the brace mount 1a, 1b, 1c.

The thickness of each tab of the brace attachment means is substantially the same as the thickness of each perpendicular sheet of the body, and each exposed edge of the brace attachment means 4 has a rounded or curved profile.

The second type of section, as seen in Figure 4B is equivalent to the first type of section but the body of the second type of section 6 does not comprise a brace attachment means 4 and instead comprises two flat outer surfaces.

Each connection portion 5 of the section extends in the same direction as the sheet of the body 2, 6 to which it is attached. Each connection portion has a slightly smaller length, than the height of the body 2, 6, resulting in two indented notches in the connection portion's height profile when compared to the height profile of the body 2. The indented notches of the connection portions allow clearance for insertion of a stopper cap 11 of the locking pin 3 when assembling the brace mount la, 1b, 1c around a post 8.

Each connection portion 5 has an inner surface which comprises a flat inner edge which continues from the flat surface of the inside surface of the sheet of the body 2, 6 to which the connection portion 5 is attached. Following the flat inner edge, the inner surface of the connection portion diverts at an angle of 45 degrees away from the flat plane of the inner surface (or radially away from the centre of the post 8 when the brace mount 1a, 1b, 1c is in use, said differently) to form a flat face which abuts an equivalent flat face of the connection portion 5 of another section when the brace mount 1a, 1b, 1c is assembled around a post.

Each connection portion also has an outer surface which does not contact the post or another connection portion. The outer surface is inset from the outer surface of the body and continues with a straight profile substantially as far as the flat inneredge of the connection portion 5. Following this, the outer surface then projects outward from the straight profiled inset portion of the connection portion 5 and curves around to form a semi-circular cross-sectional profile (when viewed from above) which joins up with the end of the flat face which diverts at an angle of 45 degrees of the inner surface.

When two connection portions (of two sections which are positioned around a post 8) are placed such that the flat faces which divert at an angle of 45 degrees are adjacent, they form three quarters of a circle in cross-sectional profile (when viewed from above), with a fourth quarter formed of the straight profiled inset parts of the connection portions 5 which connect the curved portions to the bodies 2, 6.

The three-quartered circular cross-sectional profile provides a purchase point to which a locking pin 3 may be secured, in turn securing the sections of the brace mount la, 1b, 1c against each other and around the post 8.

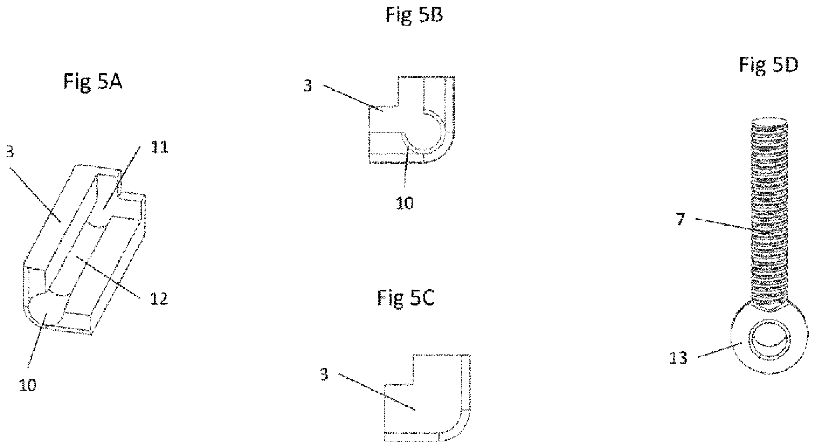

The locking pin is demonstrated in Figures 5A-C. The locking pin is a single component which comprises a slot which has a cross sectional shape (through its middle in the plane which is perpendicular to the long axis of the post 8) of three quarters of a circle, with the fourth quarter being open with flat surfaces of the opening being directed at 90 degrees from each other. One axial end of the slot comprises a stopper cap 11 and the axial other end of the slot is open and comprises a tapered section 10 which leads into the slot 10. The stopper cap 11 helps to keep the
pin in position once ithas been slotted over the connection portions and the tapered section 10 enables easier positioning and sliding of the pin 3 over the connection portions 5. The locking pin 3 also has rounded outer edges and a length which matches the length of the body 2, 6.

In order to attach the brace mount 1a, 1b, 1c around a post 8, two sections are placed around the post 8 such that the flat faces which divert at an angle of 45 degrees of the connection portions 5 abut and the locking pins 3 are slotted over the connection portions 5 via the open end 10 of the locking pin 3. At least one of the two sections will be of the first type (having brace attachment means 4), depending on the need with regards to attaching braces. The positioning of the brace attachment means 4 is determined by the positioning of the sections and their rotational orientation relative to the post 8. Once the brace mount 1a, 1b, 1c is secured to the post 8, it will be steady enough/secured in position to enable attachment of a brace 9 to the brace attachment means 4 using the eye bolt 7 combined with an attachment nut and bolt.

The orientation and combined configurations of the brace attachment 4 means may be changed by rotating the sections by 180 degrees about the axis as discussed above, which runs through the centre of a plane extending from the first connection portion 5 to the second connection portion 5, and which, in use, is perpendicular to the central axis of the post 8.

In the preferred embodiment each section and each pin 3 is formed of metal, however plastic could also be used if desired, or a combination of a metal core and plastic cladding.

Throughout this specific description, the terms up/down, top/bottom etc. have been used with reference to the directions shown in the figures, but those skilled in the art will appreciate that posts and brace mounting apparatus can be fitted and assembled at various angles based on the layout and configuration of a fence or enclosure. Clearly, the terms up/down, top/bottom etc. are used not in a limiting sense, but for the sake of explaining the arrangements as shown.

The above embodiments are described by way of example only. Many variations are possible without departing from the scope of the invention as defined in the appended claims.

## Claims

1. a brace mount for attaching a brace to a post, the brace mount comprising a section comprising: a body, a first connection portion, a second connection portion, and a brace attachment means, wherein:
a) the body is operable to surround part of the post in use;
b) the first and second connection portions are operable to connect the body to the rest of the brace mount, around the post, the first and second connection portions shaped and positioned on the body that the first connection portion is operable to connect to a first part of the rest of the brace mount and the second connection portion operable to connect to a second part of the rest of the brace mount when the body is in a first orientation around the post and with respect to the rest of the brace mount and the first connection portion is operable to connect to the second part of the rest of the brace mount and the second connection portion is operable to connect to the first part of the rest of the brace mount when the body is in a second orientation around the post and with respect to the rest of the brace mount, the first orientation being different from the second orientation; and
c) the brace attachment means is positioned on the body, the brace attachment means configured to receive the brace.

2. A brace mount according to claim 1, wherein the rest of the brace mount comprises at least one further body operable to surround a further part of the post in use.

3. A brace mount according to any of claims 1 to 2, wherein the rest of the brace mount comprises a further brace attachment means, configured to receive a brace.

4. A brace mount according to any of claims 1 to 3, wherein one or more of the bodies are a plate, and wherein the connection portions are positioned on edges of the plate, with each connection portion being positioned on opposite edges of the plate.

5. A brace mount according to any of claims 1 to 4, wherein the or each body comprises an inner surface which is may be shaped to, in use, fit to an opposing surface of the post.

6. A brace mount according to any of claims 1 to 5, wherein the or each body comprises an outer surface which, in use, faces away from the post, and wherein the or each respective brace attachment means is positioned on the outer surface.

7. A brace mount according to any of claims 1 to 6, wherein the or each body has the shape of part of apolygonal tube.

8. A brace mount according to any of claims 1 to 6, wherein the or each body has the shape of part of acylindrical tube.

9. A brace mount according to any of claims 1 to 7, wherein the or each body comprises a first sheet and a second sheet, the first and second sheet joined together at an angle to each other.

10. A brace mount according to claim 9, wherein The first and second sheet are each rectangular, and wherein the first and second sheet are each joined together at a respective edge.

11. A brace mount according to any of claims 9 to 10, wherein one or more of the brace attachment means are positioned on the respective first sheet.

12. A brace mount according to any one of claim 9 to 11, wherein one or more of the brace attachment means are positioned with the centre of the brace attachment means aligned with the centre of the respective first sheet.

13. A brace mount according to any of claims 1 to 12, wherein one or more of the brace attachment means are configured to receive an eye bolt of a brace.

14. A brace mount according to any of claims 1 to 13, wherein each connection portion comprises a magnet, and wherein the magnets of the connection portions are positioned with magnetic fields in the same direction.

15. A brace mount according to any of claims 1 to 14, wherein the brace mount is configured for use as component of a pet or livestock enclosing fence.

16. A fence comprising one or more brace mounts according to any of claims 1 to 15.
